# EUROPEAN PATENT APPLICATION

(11) **EP 1 384 965 A2**
(43) Date of publication of application: **28.01.2004**
(21) Application number: 03253049.5
(22) Date of filing: 15.05.2003
(51) Int. Cl.: F25D 29/00

(54) **Refrigerator with wireless access point**

(30) Priority: 27.07.2002 KR 2002044482
(71) Applicant: SAMSUNG ELECTRONICS CO., LTD., Suwon-City, Kyungki-do (KR)
(72) Inventor: Song, Dong-june, Busan City (KR); Park, Pyeong-ki, Kwangju City (KR); Ahn, Kyu-hwan, Busan City (KR)
(74) Representative: Geary, Stuart Lloyd

(57) **Abstract**

A networking system for a refrigerator in which a network module available for both wireless and wire accesses to the network over the Internet is built, thereby allowing an access to an other network over the Internet and constructing a home network, the networking system able to be easily upgraded, and a method of upgrading the networking system.

## Description

The present invention relates to refrigerator comprising electronic refrigerator control means.

It is known to connect home appliances using a data network.

A known home networking system comprises a home gateway connecting the home network to an external network, e.g. the Internet. To manage the home networking system, a central terminal is required for connecting to and controlling the electronic appliances on the network so that it operates as a unified system and also to collect information from each of the electronic appliances. The central terminal is also used to display statuses of the electronic appliances on the network to the user and to receive user commands for controlling the electronic appliances on the network.

In order to construct a home networking system, a home server and a separate home gateway are required. Also, upgrading of the networking devices and programs for managing them in a continuous manner is needed. In this regard, since upgrading has a comparatively short cycle, the user must pay careful attention to the system management.

A refrigerator according to the present invention is characterised by including a wireless access point with means for providing Internet-connectivity and by the refrigerator control means having wireless communications means for communicating with the wireless access point.

Preferably, the refrigerator will include a wired-to-wireless network bridge means for providing wireless access to the wireless access point for a wired network, for example a mains wiring network connecting domestic appliances and other devices. More preferably, the refrigerator control means and the bridge means share a wireless interface for communication with the wireless access point.

A refrigerator according to the present invention may be used in a system which also comprises a computer configured for communication via the wireless access point with other elements of the system so as to provide a user interface therefor.

Preferably, the bridge means includes a home network control unit.

Preferably, various elements, e.g. refrigerator control means, the home network control unit and the computer, are configured to obtained upgrade software from a remote server via the wireless access point.

Preferably, the computer is a webpad- or tablet-type computer.

Embodiments of the present invention, will now be described, by way of example, with reference to the accompanying drawings, in which:
Figure 1 is a block diagram of a domestic network including a refrigerator according to the present invention;
Figure 2 is a block diagram of the refrigerator and the wireless terminal shown in Figure 1;
Figure 3 is a block diagram showing the refrigerator in Figure 1 communicating with a remote server;
Figure 4 is a flowchart illustrating an upgrade process of a refrigerator-networking system according to an embodiment of the present invention; and
Figure 5 is a flowchart illustrating an upgrade process of another refrigerator-networking system according to the present invention.

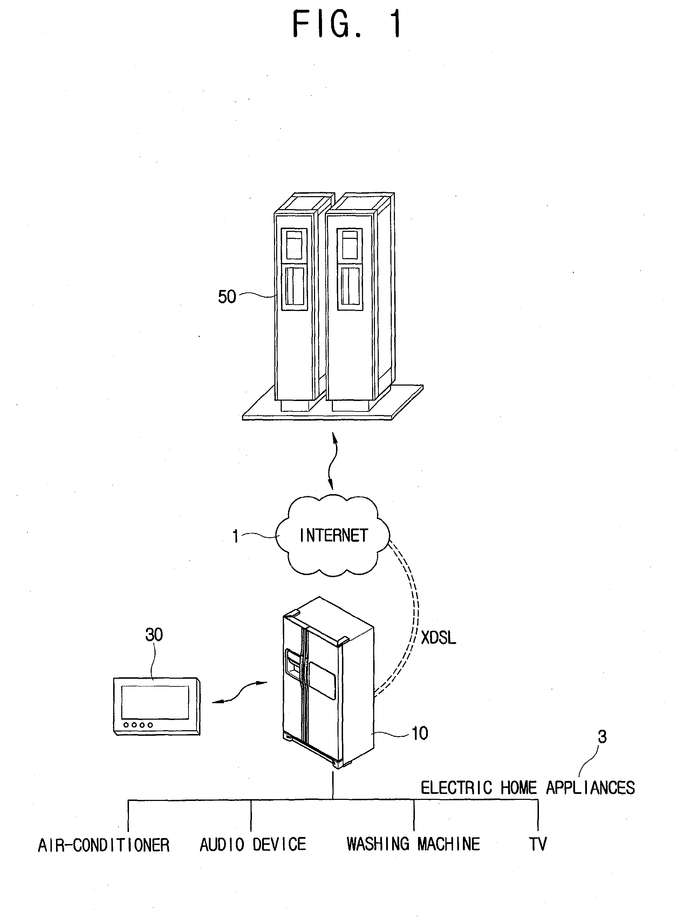

Referring to Figure 1, a domestic networking system includes a refrigerator 10, including means (not shown) to provide access to the Internet 1 through a dedicated connection and a wireless access point (not shown), and a web pad 30 available for wireless communication with the refrigerator 10. The networking system also includes a variety of other electric home appliances 3.

The refrigerator 10 accesses the Internet 1 through the dedicated connection and allows the other appliances to access the Internet 1 wirelessly. The refrigerator 10 is connected to the domestic network, to thereby collect and manage information from the electric home appliances 3 that are connected to the domestic network.

A user can wirelessly access the refrigerator 10 using the web pad 30 to obtain data from the refrigerator 10 and send commands for controlling the refrigerator 10. It is also possible to ascertain a status of the domestic network from the refrigerator 10 using the web pad 30 and to manage the domestic network. The web pad 30 can access the Internet 1 via the wireless connection to the refrigerator 10.

The refrigerator 10 can an access to an upgrade server 50 through the Internet for upgrading various programs. This function of the refrigerator will now be described in detail.

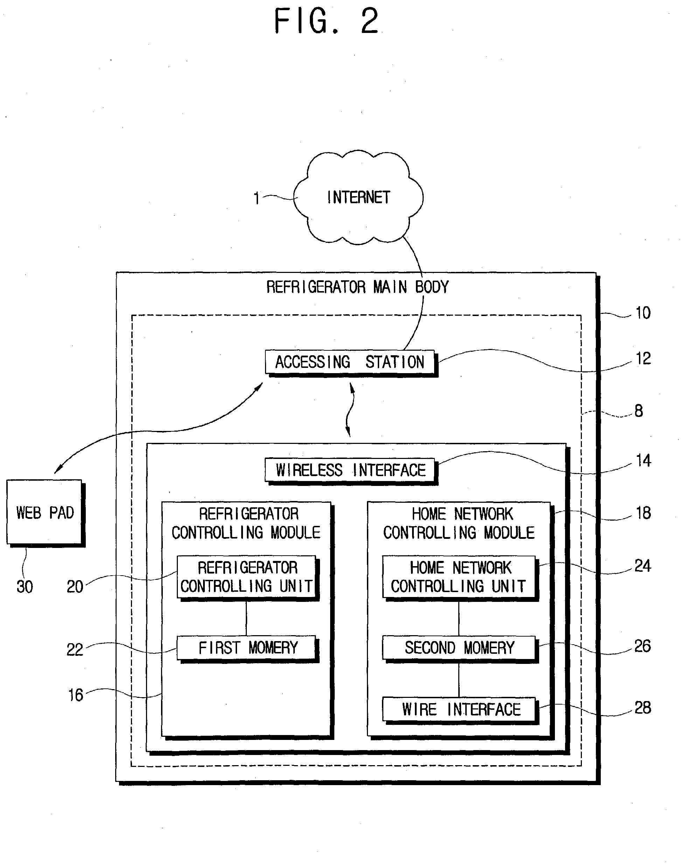

Referring to Figure 2, the refrigerator 10 includes a network module 8 allowing a variety of network accessing functions.

The network module 8 is comprised of an accessing station 12, connected to the Internet 1 via a wired connection, a refrigerator control module 16 and a domestic network control module 18 which communicate wirelessly with the accessing station 12. The refrigerator control module 16 and the domestic network control module 18 are accessible to the web pad 30, which can wirelessly access the accessing station 12 from outside the refrigerator 10.

Since the accessing station 12 is connected to the Internet, the units that can communicate wirelessly with the accessing station 12, e.g. using a wireless LAN (local area network) card, can access the Internet. The accessing station 12 outputs a signal to units, equipped with means for wireless access to the Internet within a certain range thereof, indicating that wireless access to the network is available, and on the other hand, allowing the unit access the Internet 1 using wireless access to the accessing station 12. Accordingly, the web pad 30 has access to the Internet through the accessing station 12.

The refrigerator control module 16 controls the refrigerator's functions and the domestic network control module 18 manages and controls a multiplicity of electronic units connected to the refrigerator main body 10. The refrigerator control module 16 and the domestic network control module 18 wirelessly access the accessing station 12 through a wireless interface 14. Accordingly, the web pad 30, provided separately from the refrigerator 10, the refrigerator control module 16 and the domestic network controlling module 18 can be interconnected with one another through the accessing station 12. Wireless interfaces may be provided in the refrigerator control module 16 and the domestic network controlling module 18.

The refrigerator control module 16 includes a refrigerator control unit 20 for controlling a variety of units within the refrigerator 10 and a first memory 22 storing therein environmental data concerning the current status, a controlled status and a setup status of the refrigerator, in order to perform such inherent functions of the refrigerator as cooling and additional functions added thereto.

The refrigerator control unit 20 can provide the data stored in the first memory 22 for display on the web pad 30 through the accessing station 12. Thus, a user can check the current status of the refrigerator by viewing the environmental data on the web pad 30, change the setup status of the refrigerator using the web pad 30, and execute a selected function of the refrigerator using the web pad 30. User input signals input using the web pad 30 are transmitted to the control unit 20 of the refrigerator control module 16 to control the refrigerator.

The domestic network control module 18 includes a wire interface 28 for communicating with a variety of electric home appliances 3 through wires and a domestic network control unit 24 which checks the statuses of the electronic home appliances 3 connected to the home network through the wire interface 28 and stores the checked status in a second memory 22.

The home network control unit 24 of the home network control module 18 can provide the data stored in the second memory 26 to the web pad 30 for display via the accessing station 12. Thus, a user can ascertain domestic network information by displaying it on the web pad 30 and the status of an electronic appliance 3 connected to the domestic network, and also control electronic appliances 3 connected to the domestic network by the means of the web pad 30. A signal to control the domestic network input through the web pad 30 is transmitted to the domestic network control module 18 through the wireless interface 14, the control signal being applied in controlling the home networking.

In an embodiment, domestic networking based on the domestic network control module 18 employs "HomePlug" using mains wiring. Where "HomePlug" is supported by the domestic network control module 18, the wire interface 28 of the home network controlling module 18 comprises a "HomePlug" interface and all the electronic appliances 3 connected to the main wiring of the home are monitored and controlled by the domestic network control unit 24. Operational information of the home network control module 18 is ascertained through the web pad 30 via the accessing station 12. It is also possible to input a control signal into the home network control module 18 using the web pad 30.

As described above, the refrigerator 10 includes the accessing station 12 and the home network control module 18 for allowing a network to be constructed between electric home appliances 3. This refrigerator 10 function as a home gateway available for the domestic networking.

With this configuration, a process of upgrading the system will now be described.

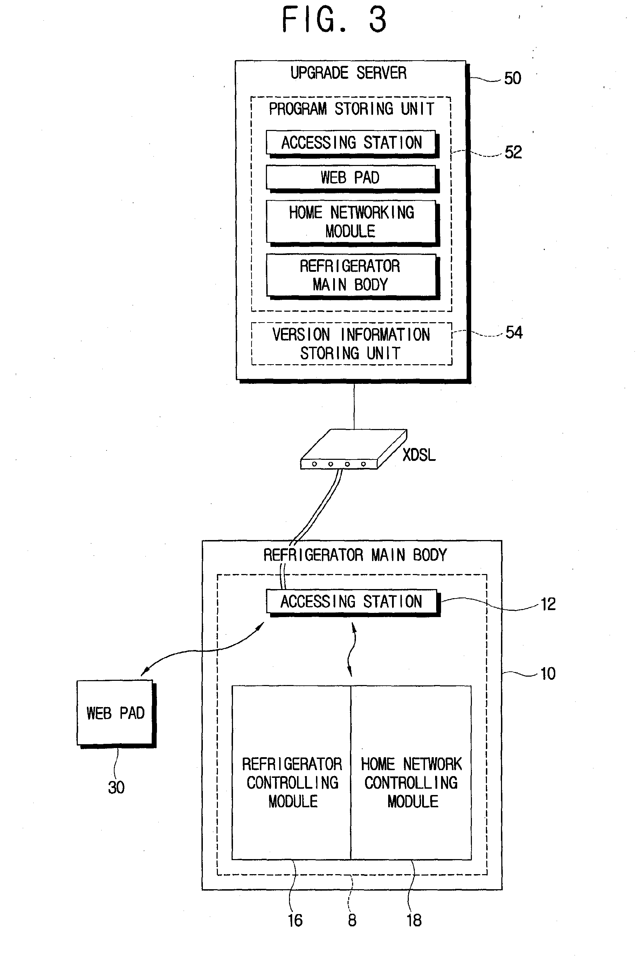

Referring to Figure 3, the refrigerator 10 can access an external upgrade server 40 through an Internet connection such as xDSL (ADSL, HDSL, VDSL, etc.), a cable modems, etc. The accessing station 12 built into the refrigerator 10 supports communication between the web pad 30, the refrigerator control module 16 and the home network control module 18 and remote stations across the Internet.

Constituent elements which can access the upgrade server 50 through the Internet comprise the web pad 30, the refrigerator control module 16 and the home network control module 18, etc., inclusive of the accessing station 12. Because the respective constituent elements accessible to the upgrade server 50 have independent engines for upgrading, they can automatically access the upgrade server 50, to thereby ascertain whether upgrading is needed or not.

The upgrade server 50 includes a program storing unit 52 storing firmware and/or software for the web pad 30, the accessing station 12, the refrigerator control module 16, and the domestic network control module 18, a storage unit 54 storing upgraded program version information. The programs stored in the program storing unit 52 comprises the most recent version of the programs and will be updated from time to time when new versions of the programs are developed.

The upgrade server 50 has its own fixed address with which each constituent element is allowed to access it. Since the upgrade server 50 is a server structured for provision of program files, it is most preferable that it comprises an FTP (file transfer protocol) server.

In accordance with this, a constituent element in contact with the upgrade server 50 is allowed to ascertain the versions of the relevant programs stored in the version information storage unit 54, to confirm whether the programs currently in use have been updated to the newest version. Where the newer version of the program has been discovered, the relevant program in the newer version from the program storing unit 52 is downloaded.

The constituent element into which the newer version of program is downloaded indicates that the program has been upgraded, so as to allow the user to select an installation of the new version of the program. The firmware can be upgraded by downloading the program according to the user's selection.

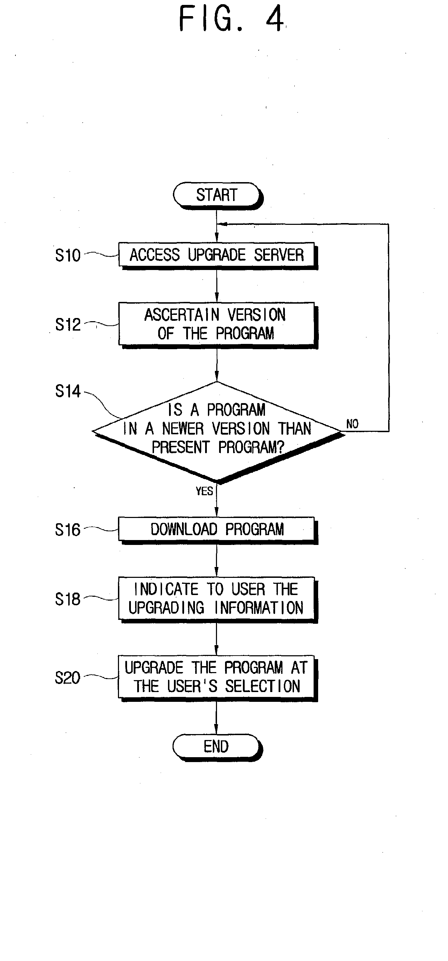

Referring to Figure 4, the web pad 30 accesses the upgrade server 50 for an upgrade via the accessing station 12 (S10). The web pad 30 ascertains the data stored in the version information storing unit 54 of the upgrade server 50 to determine the version of the web pad program currently available from the upgrade server 50 (S12). The web pad 30 determines whether the version of the currently available program presently available from the upgrade server 50 is newer than the version of the program presently being run on the web pad 30 (S14). If it is determined that a newer version of program is available, the web pad 30 downloads the program from the program storing unit 52 of the upgrade server 50 (S16). The web pad 30 indicates to the user on its screen that an upgraded program has been downloaded (S18). If the user selects installation of the program, the downloaded program is installed (S20).

The upgrade engine functions are programmed into the web pad 30 to make upgrading possible. The upgrade server access cycle of the web pad 30 is set during manufacture or by the user.

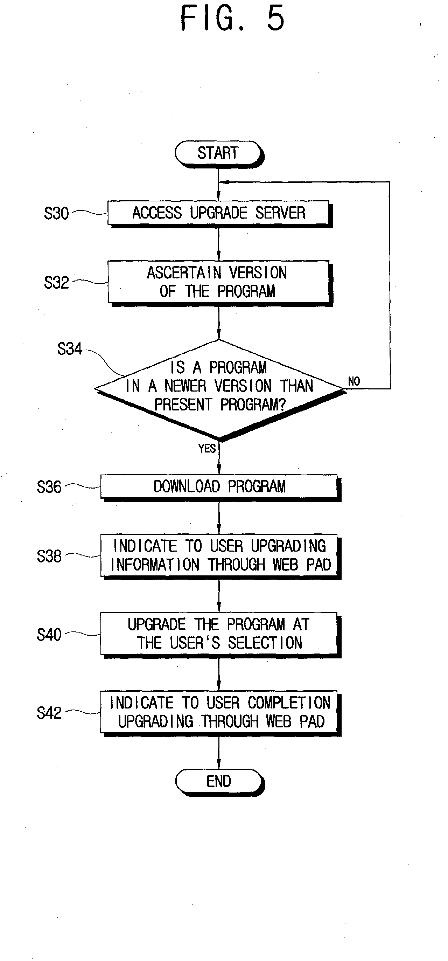

The processes for upgrading the accessing station 12, the domestic network control module 18, and the refrigerator control module 16, none of which is equipped with a display screen, are as shown in Figure 5. For the sake of convenience, the process of upgrading the accessing station 12 will be used as an example.

According to a predetermined upgrade server access cycle, the accessing station 12 accesses to the upgrade server 50 over the Internet 1 (S30). The accessing station 12 ascertains the present version of the program relevant to the accessing station 12, provided from the upgrade server 50, by inspecting the data stored in the version information storing unit 54 of the upgrade server 50 (S32). The accessing station 12 determines whether the program provided by the upgrade server 50 is of a newer version than the program presently running on the accessing station 12 (S34). If it is determined that a newer version of program is available, the accessing station 12 downloads the program from the program storing unit 52 of the upgrade server 50 (S36). When the program is downloaded, the accessing station 12 indicates to the user through the screen of the web pad 30 that the upgraded program has been downloaded (S38). If the user selects installation of the program through the web pad 30, the downloaded program is installed (S40). When the upgrading of the program is completed, the accessing station 12 indicates to the user through the web pad 30 that the program has been upgraded (S42).

As described above, the accessing station 12, the domestic network control module 18, and the refrigerator control module 16, which do not have their own displays, inform the user of installation of the upgraded network through the web pad 30, and upgrade their programs according to the user's instructions input through the web pad 30.

The upgrading processes can be performed by the respective upgrade engines programmed independently into the constituent elements, and each constituent element may access the upgrade server 50 independently to download upgraded programs.

In an embodiment, the upgrade server 50 is comprised of an FTP server. It is also preferable that each constituent element accesses the upgrade server 50 in an FTP mode.

As describe above, the accessing station can function as a home gateway connecting a wired or wireless domestic network to the Internet. A web pad is provides a user interface for various elements of the system and communicates with the accessing station wirelessly.

The components included in the system may include memories, processors, and/or application specific integrated circuits ("ASICs"). Such memories may include machine-readable media on which are stored sets of instructions (i.e., software) embodying any one, or all, of the methodologies described herein. Software can reside, completely or at least partially, within this memory and/or within the processor and/or ASICs. For the purposes of this specification, the term "machine-readable medium" shall be taken to include any mechanism that provides (i.e., stores and/or transmits) information in a form readable by a machine (e.g., a computer). For example, a machine-readable medium includes read only memory ("ROM"), random access memory ("RAM"), magnetic disk storage media, optical storage media, flash memory devices, electrical, optical, acoustical, or other form of propagated signals (e.g., carrier waves, infrared signals, digital signals, etc.), etc.

## Claims

1. A refrigerator comprising electronic refrigerator control means (21), **characterised by** including a wireless access point (12) with means (12) for providing Internet-connectivity and **by** the refrigerator control means (21) having wireless communications means (14) for communicating with the wireless access point (12).

2. A refrigerator according to claim 1, including a wired-to-wireless network bridge means (18) for providing wireless access to the wireless access point (12) for a wired network (3).

3. A refrigerator according to claim 2, wherein the refrigerator control means (21) and the bridge means (18) share a wireless interface (14) for communication with the wireless access point (12).

4. A system comprising a refrigerator according to any preceding claim and a computer (30) configured for communication via the wireless access point (12) with other elements of the system so as to provide a user interface therefor (21).

5. A system according to claim 4, wherein the bridge means (18) includes a home network control unit (24).

6. A system according to claim 5, wherein the home network control unit (24) is configured to obtained upgrade software from a remote server via the wireless access point (12).

7. A system according to claim 4, 5 or 6, wherein the refrigerator control means (21) is configured to obtained upgrade software from a remote server via the wireless access point (12).

8. A system according to any one of claims 4 to 7, wherein said computer (30) is configured to obtained upgrade software from a remote server via the wireless access point (12).

9. A system according to any one of claims 4 to 8, wherein said computer (30) is a webpad- or tablet-type computer.

10. A networking system for a refrigerator, comprising:
an accessing station provided in a main body of the refrigerator, wherein the accessing station allows other electric appliances to wirelessly access to the Internet;
a wireless interface provided in the refrigerator main body, making a wireless access to the accessing station;
a home network controlling module provided in the refrigerator main body, including a home networking interface accessing a home network constructed with a plurality of electronic home appliances that are provided outside the refrigerator main body, and a home network controlling unit supplying data about statuses of the plurality of electronic home appliances collected through the home networking interface to the wireless interface; and
a wireless terminal provided as a separate unit from the refrigerator main body, making a wireless connection to the home network controlling module via the wireless interface through the accessing station of the refrigerator main body, to then display the status data of the electronic home appliances supplied through the wireless interface.

11. The system according to claim 10, further comprising a refrigerator controlling module provided in the refrigerator main body, including a memory, which stores therein status data of the refrigerator such as present temperature of compartments of the refrigerator, and a refrigerator controlling unit to provide the status data of the refrigerator in the memory through the wireless interface and to control a cooling system,
wherein the wireless terminal wirelessly accesses the refrigerator controlling module via the wireless interface through the accessing station of the refrigerator main body, the refrigerator status data supplied through the wireless interface.

12. The system according to claim 10, wherein the home networking interface of the home network controlling module comprises a Home Plug interface accessing a power line based home network constructed by connection of power lines.

13. The system according to claim 10, further comprising an upgrade server having a program database, which stores therein a program for the wireless terminal and which is executed at the wireless terminal, and a server controlling unit to supply the wireless terminal program to the wireless terminal through the Internet, according to the request of the wireless terminal that accesses the Internet, to download the program,
wherein the wireless terminal accesses the upgrade server of the Internet through the accessing station of the refrigerator main body, to thereby request downloading of the wireless terminal program.

14. The system according to claim 13, wherein the program database of the upgrade server further includes a program for home networking, executed at the home network controlling module,
wherein the server controlling unit supplies the home networking program to the home network controlling module through the Internet in response to the download request of the home network controlling module that accesses the Internet,
and wherein the home network controlling unit of the home network controlling module accesses the upgrade server of the Internet through the accessing station of the refrigerator main body and requests downloading of the home networking program.

15. The system according to claim 13, wherein the upgrade server comprises a server employing a file transfer protocol (FTP) mode.

16. The system according to claim 14, wherein the upgrade server comprises a server employing a file transfer protocol (FTP) mode.

17. A method of upgrading the refrigerator networking system according to claim 13, comprising:
allowing the wireless terminal to access the upgrade server through the accessing station of the refrigerator main body;
determining whether a version of the program for the wireless terminal supplied from the upgrade server is newer than the program currently in use;
downloading the wireless terminal program from the upgrade server if the version of the wireless terminal program supplied from the upgrade server is newer than the program currently in use;
indicating to a user that the wireless terminal program has been downloaded; and
installing the wireless terminal program according to a selection by the user.

18. The method according to claim 17, further comprising:
allowing the home network controlling module to access the upgrade server through the accessing station of the refrigerator main body;
determining whether a version of a program for home networking supplied from the upgrade server is newer than the program currently in use;
downloading the home networking program from the upgrade server if the version of the home networking program supplied from the upgrade server is newer than the program currently in use;
indicating to the user through the wireless terminal that the home networking program has been downloaded; and
installing the home networking program according to the user's selection through the wireless terminal.

19. A refrigerator in a home networking system, comprising:
a refrigerator control module to control general functions of the refrigerator;
a local network control module to control a plurality of other appliances, which are connected to the local network control module; and
an access unit to connect the refrigerator to an outside network, to provide the plurality of other appliances with access to the outside network, and to provide a user with wireless access to the outside network, the refrigerator, and the plurality of other appliances, wherein the user is able to control the refrigerator and the plurality of other appliances via a wireless terminal.

20. The refrigerator of claim 19, wherein the refrigerator control module comprises:
a memory unit to store environmental data of a current status of the refrigerator, a controlled status of the refrigerator, and a setup status of the refrigerator; and
a refrigerator control unit to provide control of the refrigerator to the user,
wherein the refrigerator control unit transmits the current status of the refrigerator to the wireless terminal for display to the user, wherein the refrigerator control unit receives a change of the setup status of the refrigerator from the user via the wireless terminal, and wherein the refrigerator control unit receives a refrigerator control input from the user via the wireless terminal.

21. The refrigerator of claim 19, wherein the local network control module comprises:
an interface unit to connect the plurality of other appliances to the local network control module;
a memory unit to store a plurality of current statuses of the plurality of other appliances; and
a local network control unit to provide control of the plurality of other appliances to the user,
wherein the local network control unit transmits the current statuses of the plurality of other appliances to the wireless terminal for display to the user, and wherein the local network control unit receives an other appliance control input from the user via the wireless terminal.

22. The refrigerator of claim 21, wherein the local network control module supports a home plug mode, wherein power wiring is used to connect the refrigerator to the plurality of other appliances.

23. The refrigerator of claim 19, wherein the outside network is connected to the Internet.

24. The refrigerator of claim 19, wherein the access unit is connected to an upgrade server, and wherein the upgrade server stores firmware to upgrade the refrigerator control module, the local network control module, the access unit, and the wireless terminal.

25. The refrigerator of claim 24, wherein the upgrade server is a file transfer protocol (FTP) server.

26. A method of upgrading a home networking system, comprising:
determining a current version of a driving program to be upgraded, wherein the driving program drives a refrigerator, one of a plurality of other appliances connected to the refrigerator, or a wireless terminal;
downloading a new version of the driving program, if the new version is newer than the current version;
displaying to a user a message that the new version was downloaded; receiving from the user a command to install the new version; and
installing the new version.

27. The method of claim 26, further comprising:
displaying to the user a message that the driving program has been successfully upgraded.

28. The method of claim 26, wherein the new version of the driving program is downloaded from a file transfer protocol (FTP) server.

29. The method of claim 26, wherein the refrigerator, the one of the plurality of other appliances, or the wireless terminal determines the current version of the driving program and downloads the new version of the driving program.

30. A machine-readable medium that provides instructions, which, when executed by a machine, cause the machine to perform operations for upgrading a home networking system, comprising:
determining a current version of a driving program to be upgraded, wherein the driving program drives a refrigerator, one of a plurality of other appliances connected to the refrigerator, or a wireless terminal;
downloading a new version of the driving program, if the new version is newer than the current version;
displaying to a user a message that the new version was downloaded; receiving from the user a command to install the new version; and
installing the new version.

31. The machine-readable medium of claim 30, further comprising:
displaying to the user a message that the driving program has been successfully upgraded.

32. The machine-readable medium of claim 30, wherein the new version of the driving program is downloaded from a file transfer protocol (FTP) server.

33. The machine-readable medium of claim 30, wherein the refrigerator, the one of the plurality of other appliances, or the wireless terminal determines the current version of the driving program and downloads the new version of the driving program.
